(19) Europäisches Patentamt
European Patent Office
Office européen des brevets

(11) **EP 2 367 093 A1**

(12) **EUROPEAN PATENT APPLICATION**
published in accordance with Art. 153(4) EPC

(43) Date of publication:
**21.09.2011 Bulletin 2011/38**

(51) Int Cl.:
**G06F 3/033** (2006.01)    **G06F 3/042** (2006.01)

(21) Application number: **09825939.3**

(86) International application number:
**PCT/JP2009/006108**

(22) Date of filing: **16.11.2009**

(87) International publication number:
**WO 2010/055686 (20.05.2010 Gazette 2010/20)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **14.11.2008 JP 2008292837**

(71) Applicant: **YOSHIDA, Kenji**
**Bunkyo-ku**
**Tokyo 112-0002 (JP)**

(72) Inventor: **YOSHIDA, Kenji**
**Bunkyo-ku**
**Tokyo 112-0002 (JP)**

(74) Representative: **Dunleavy, Kevin James**
**Knoble & Yoshida LLC**
**p/o De Vries & Metman**
**Overschiestraat 180**
**1062 XK  Amsterdam (NL)**

(54) **MOUSE PROVIDED WITH A DOT PATTERN READING FUNCTION**

(57)    To provide a mouse having a mousse function of being able to input relative position information and a function of being able to input absolute position information while enabling a user to accurately designate a reading position of a code by visual recognition. The mouse is an information input device that reads a dot pattern formed on a medium surface and obtained by patterning XY coordinate values or XY coordinate values and a code value based on a predetermined algorithm, including a casing having a reading hole for reading the dot pattern provided at its bottom, position designation means for designating a predetermined position on the medium surface outside the casing, a dot pattern reading unit for reading the dot pattern on the medium surface just under the reading hole, dot pattern irradiation means for irradiating the medium surface with light to read the dot pattern, and a control unit for calculating the XY coordinate values read by the dot pattern reading unit and a direction of the dot pattern, and correcting the XY coordinate values and the direction of the dot pattern by a predetermined distance and direction, to calculate the predetermined position designated by the position designation means.

FIG.1(a)

FIG.1(b)

**Description**

**FIELD OF THE INVENTION**

The present invention relates to an information input device capable of reading a dot pattern arranged on a medium, and accurately handling absolute coordinates.

**BACKGROUND OF THE INVENTION**

A mouse has been known as auxiliary input means for controlling a pointer and a cursor displayed on a monitor connected to an information processing apparatus such as a personal computer. The mouse is moved forward and backward and rightward and leftward by a user on a plane such as a mouse pad, and inputs a signal conforming to a movement distance/direction of this relative position to the information processing apparatus. Means for detecting a two-dimensional relative movement distance of the mouse includes mechanical means using a rotary encoder and optical means for reading a change of a surface of the mouse pad or the like with infrared rays. Both the means input relative position information relating to a movement distance/movement direction of the mouse from a detected amount of change of XY coordinates to the information processing apparatus, to control movements of the pointer and the cursor on the monitor.

Known as a mouse serving as an auxiliary input device for the information processing apparatus has been one provided with a barcode reader (Patent Literature 1). The barcode reader is one of scanners capable of reading a code value defined in a barcode. A scanner capable of reading a dot pattern, for example, in addition to a barcode as a reading object has also been devised in recent years (Patent Literatures 2 and 3). As a scanner for reading a dot pattern, a scanner having a configuration in which position information (XY coordinate values) relating to a reading position, together with code value information, can be read has been devised (Non-Patent Literature 1).

However, when a code reader capable of reading XY coordinate values is added to a mouse, there was a problem that if a dot pattern in which the XY coordinate values are defined is read, a mouse casing itself interferes with the reading so that a reading position cannot accurately be viewed. There is also a similar problem that if a pen-type scanner is used to read a reading position, the reading position cannot be viewed.

On the other hand, the auxiliary input means for controlling the pointer and the cursor includes a pen tablet. In the pen tablet, an absolute position is designated on an operation plate corresponding to a screen, which is suitable for detailed work. However, the pen tablet is so big and heavy as to require a fixed work area on a desk, and therefore lacks in convenience.

The present invention is directed to providing an auxiliary input system capable of accurately inputting an absolute position and/or a code value even in a configuration in which an auxiliary input device such as a mouse covers a pattern surface.

Further, a dot pattern in which a code value and/or XY coordinate values is/are defined on a medium surface can be used with a high degree of freedom because a user can optionally design a work area and an operation instruction item using an information processing apparatus and a printer.

**Prior Art Document**

Patent Document

    [Patent Document 1] Japanese Unexamined Patent Application Publication No. 2004-126920
    [Patent Document 2] Japanese Unexamined Patent Application Publication No. 2007-213612
    [Patent Document 3] Japanese Unexamined Patent Application Publication No. 2007-310894

Non-Patent Document

    [Non-Patent Document 1] G1 scanner (http://www.grid-mark.co.jp/gtype01.html)

## SUMMARY OF THE INVENTION

Problems to be Solved by the Invention

A barcode reader-equipped mouse has a problem that, because it has a barcode reader installed near the center of its bottom surface, and a barcode is covered with a main body of the mouse when read, a user cannot match the barcode reader with a code position which he/she desires to have the barcode reader accurately read.

When a user reads any coordinate position using a G scanner, it is difficult to have the G scanner accurately read a reading position visually recognized by the user because the reading position is hidden in a main body of the G scanner.

The pen tablet or the like has a problem that it has a special configuration in which a pen-type device and a plate-shaped device are combined with each other, and is therefore bigger, heavier, and less convenient.

An information input device (a grid mouse) according to the present invention has been provided in view of these points, and has its technical problem to have a mouse function of being able to input relative position information and a function of being able to input absolute position information and enable a user to accurately designate a reading position of a code by visual recognition.

Means for Solving the Problems

In order to solve the above-mentioned problems, the present invention uses the following means.

(1) An information input device (a grid mouse) according to the present invention is an information input device that reads a dot pattern formed on a medium surface, obtained by patterning XY coordinate values or XY coordinate values and a code value based on a predetermined algorithm, and optically readable includes a casing having a reading hole for reading the dot pattern provided at its bottom, position designation means for designating a predetermined position on the medium surface outside the casing, a dot pattern reading unit for reading the dot pattern on the medium surface just under the reading hole, dot pattern irradiation means for irradiating the medium surface with light to read the dot pattern, and a control unit for calculating the XY coordinate values read by the dot pattern reading unit and a direction of the dot pattern, and correcting the XY coordinate values and the direction of the dot pattern by a predetermined distance and direction, to calculate the predetermined position designated by the position designation means.

For the dot pattern used in the present invention, a dot pattern, for example, GRID 1 and GRID 5, described in detail below, in which a code value and/or XY coordinate values can be defined as code information and which has direction information is suitable. The present invention is not limited to this. When code information is found by image analysis, a dot pattern the direction of which can be determined as a result can also be used.

The predetermined position on the medium surface is a position on a medium surface pointed to by the position designation means and is a position to be measured as XY coordinate values in a coordinate system on the medium surface.

According to the above-mentioned configuration, a position of the reading hole and the predetermined position on the medium surface designated by the position designation means are shifted so that a user can input the predetermined position designated by the position designation means while completely visually recognizing the predetermined position. There can be provided an information input device capable of accurately inputting absolute coordinates of a point position only by using the information input device and a medium such as paper, a mouse pad, or a transparent sheet having a dot pattern provided thereon. This eliminates the necessity of having a configuration in which a pen-type device and a plate-shaped device are combined with each other, like in a pen tablet generally used when absolute coordinates are input.

In the present invention, the control unit in the input device performs calculation processing. However, a main body of an information processing apparatus may perform the calculation processing.

(2) The information input device is further characterized in that the position designation means designates the predetermined position on the medium surface by a shape of a projection extending from the casing or a mark provided in a transparent member extending from the casing.

According to the above-mentioned configuration, the position designation means can accurately designate a position that the user attempts to designate.

(3) The information input device is further characterized in that the position designation means designates the predetermined position on the medium surface by irradiation light from predetermined position irradiation means provided in the casing.

(4) The information input device is further characterized in that the irradiation light from the predetermined position irradiation means is a laser beam.

(5) The information input device according to the present invention is an information input device that reads a dot pattern formed on a medium surface, obtained by patterning XY coordinate values or XY coordinate values and a code value based on a predetermined algorithm, and optically readable includes a casing provided with a prism including a dot pattern input unit for reading the dot pattern, a dot pattern reading unit for reading the dot pattern on the medium surface in the vicinity of the dot pattern input unit via the prism, dot pattern irradiation means for irradiating the medium surface with light via the prism to read the dot pattern, and a control unit for finding a predetermined position on the medium surface by at least the XY coordinate values read by the dot pattern reading unit.

The prism including the dot pattern input unit is used for the information input device so that refraction and total reflection of light in the prism can be used. Thus, an optical path can be freely changed. Therefore, a free arrangement design of members in an internal configuration of the information input device, including transverse arrangement of the reading unit, is enabled

(6) The information input device is further characterized in that the prism is provided to extend outward from the casing as the position designation means, and the position designation means designates the predetermined position on the medium surface by a shape of the prism extending from the casing or providing a mark in the prism extending from the casing.

(7) The information input device is further characterized in that the position designation means designates the predetermined position on the medium surface by irradiation light irradiated via the prison from predetermined position irradiation means provided in the casing.

(8) The information input device is further characterized in that the irradiation light irradiated via the prism from the predetermined position irradiation unit is a laser beam.

The above-mentioned information input device includes a mouse, a digitizer, and a tablet.

According to the configuration, the position of the reading hole and the predetermined position on the medium designated by the position designation means are shifted so that a code or the like is not covered with a main body of the mouse or the like during reading.

(9) The information input device is further characterized in that the dot pattern reading unit further functions as an optical reading unit in an optical mouse, the control unit further analyzes a change of an image read per unit time by the dot pattern reading unit, and a movement amount and a direction on the medium surface are transmitted.

In the claim, the dot pattern reading unit has a function of an optical reading unit for detecting a movement amount and a direction of an optical mouse in addition to a function of reading the dot pattern, and the control unit also analyzes the change of the image read per unit time by the dot pattern reading unit in addition to calculating the predetermined position. By such a configuration, the dot pattern reading unit and the optical reading unit in the optical mouse can be combined into one unit so that the number of members can be reduced. This enables space saving inside the mouse.

The dot pattern need not be provided on the medium surface in the claim.

Effect of the Invention

There can be provided a coordinate input device capable of inputting absolute coordinates only by using a grid mouse (an information input device) according to the present invention and a medium such as paper or a transparent sheet having a dot pattern provided thereon. This produces an effect of being able to provide an absolute coordinate input device, which is simple and highly convenient.

A reading position and a target visually recognized by a user are shifted so that the user can read any coordinate position while completely visually recognizing the target. This produces an effect of the user being able to accurately perform input work.

Total reflection of a prism is used, to produce an effect of enhancing a degree of freedom of arrangement positions of members in a mouse.

## BRIEF DESCRIPTION OF THE DRAWINGS

[Fig. 1] Figs. 1 (a) and (b) are diagrams showing a positional relationship between a target 50 (position designation means) and an imaging center, and a captured image;

[Fig. 2] Figs. 2 (a) to (c) are diagrams showing the usages of mouse 1;

[Fig. 3] Figs. 3 (a) to (c) are arrangement plans of a mouse 1;

[Fig. 4] Fig. 4 is a diagram showing constituent elements of a dot pattern 6 and their positional relationship;

[Fig. 5] Figs. 5 (a) and (b) illustrate examples of methods for defining information by methods for arranging information dots 72; Fig. 5 (a) is a diagram showing examples in which 3-bit information is represented; and Fig. 5 (b) is a diagram showing examples of an information dot 72 having 2-bit information;

[Fig. 6] Fig. 6 is a diagram showing examples of a method for defining information by another method for arranging information dots 72.

[Fig. 7] Figs. 7 (a) to (c) are diagrams showing examples of methods for defining information by methods for arranging a plurality of information dots 72 per grid; Fig. 7(a) is a diagram showing an example in which two information dots 72 are arranged; Fig. 7 (b) is a diagram showing an example in which four information dots 72 are arranged; and Fig. 7 (c) is a diagram showing an example in which five information dots 72 are arranged;

[Fig. 8] Fig. 8 is a diagram showing an example of a format used to extract information dots 72 from a dot pattern 6;

[Fig. 9] Figs. 9 (a) to (d) are diagrams showing examples of other arrangements of grids each including an information dot 72; Fig. 9 (a) is a diagram showing an example in which six (2 × 3) grids are arranged in one block; Fig. 9 (b) is a diagram showing an example in which nine (3 × 3) grids are arranged in one block; Fig. 9 (c) is a diagram showing an example in which 12 (3 × 4) grids are arranged in one block; and Fig. 9 (d) is a diagram showing an example in which 36 grids are arranged in one block;

[Fig. 10] Figs. 10 (a) to (c) are diagrams showing examples of other dot patterns 6b; Fig. 10 (a) is a diagram showing a positional relationship among reference point dots 73a to 73e, virtual reference points 74a to 74d, and information dots 72 in the dot pattern 6b; Fig. 10 (b) is a diagram showing an example in which information is defined depending on whether the information dot 72 is positioned on the virtual reference points 74a to 74d; and Fig. 10 (c) is a diagram showing an example in which blocks are connected two by two in each of longitudinal and lateral directions;

[Fig. 11] Fig. 11 is a diagram showing an example of a format of information bits in one block of a dot pattern 6;

[Fig. 12] Figs. 12 (a) to (c) are diagrams showing examples of a format of a dot code;

Fig. 12 (a) is a diagram showing an example in which the dot code includes XY coordinate values, a code value, and a parity; Fig. 12 (b) is a diagram showing an example in which the format is changed depending on a place where the dot pattern 6 is provided; and Fig. 12 (c) is a diagram showing an example in which the dot code includes XY coordinate values and a parity;

[Fig. 13] Fig. 13 is a functional block diagram of a mouse 1;

[Fig. 14] Fig. 14 is a flowchart of algorithms for an image data analysis unit and a code information analysis unit in a mouse 1;

[Fig. 15] Fig. 15 is a flowchart of an algorithm for a control unit in a mouse 1;

[Fig. 16] Figs. 16 (a) to (f) are diagrams showing the shape of an extension unit in a mouse 1;

[Fig. 17] Figs. 17 (a) to (c) are a side view, a top view, and a sectional arrangement plan of a second embodiment, respectively;

[Fig. 18] Fig. 18 is an enlarged view of a dot pattern reading unit according to the second embodiment;

[Fig. 19] Figs. 19 (a) to (d) are diagrams showing other arrangement formats according to the second embodiment;

[Fig. 20] Fig. 20 is a flowchart of algorithms for an image data analysis unit and a code information analysis unit in the second embodiment; and

[Fig. 21] Fig. 21 is a flowchart of an algorithm for a control unit in the second embodiment.

## Description of Reference Numerals

1  mouse (information input device)
2  book
3  grid tablet (medium)
3b  grid sheet (medium)
4  picture
5  map

| | |
|---|---|
| 6 | dot pattern |
| 7 | information processing apparatus |
| 8 | monitor |
| 9 | figure |
| 10 | dot pattern reading unit |
| 11 | infrared light emitting diode (IR-LED) (dot pattern irradiation mean) |
| 12 | reading hole |
| 13 | lens |
| 14 | infrared (IR) filter |
| 15 | complementary metal oxide semiconductor (CMOS) sensor (dot pattern reading unit) |
| 16 | printed circuit board (PCB) |
| 17 | prism |
| 20 | movement amount/direction detection unit in mechanical mouse |
| 20b | movement amount/direction detection unit (optical reading unit) in optical mouse |
| 30 | button |
| 31 | button operation detection unit |
| 32 | wheel |
| 35 | wheel detection unit |
| 40 | extension unit |
| 41 | laser pointer |
| 50 | target (position designation mean) |
| 60 | control unit |
| 65 | sending unit |
| 71 | key dot |
| 72 | information dot |
| 73 | reference point dot |
| 74 | virtual reference point |
| 99 | captured image |
| 1001 | mouse according to the second embodiment |
| 1010 | dot pattern reading unit according to the second embodiment |
| 1011 | IR-LED according to the second embodiment |
| 1012 | reading hole according to the second embodiment |
| 1013 | lens according to the second embodiment |
| 1015 | CMOS sensor according to the second embodiment |
| 1016 | PBC according to the second embodiment |
| 1017 | prism according to the second embodiment |
| 1020 | movement amount/direction detection unit (optical reading unit) according to the second embodiment |
| 1030 | button according to the second embodiment |
| 1031 | button operation detection unit according to the second embodiment |
| 1032 | wheel according to the second embodiment |
| 1035 | wheel detection unit according to the second embodiment |
| 1060 | control unit according to the second embodiment |
| 1065 | sending unit according to the second embodiment |
| 1080 | a prism including a dot pattern input unit |
| 1081 | target (position designation mean) according to the second embodiment |
| 1082 | laser pointer according to the second embodiment |

## DETAILED DESCRIPTION OF THE INVENTION

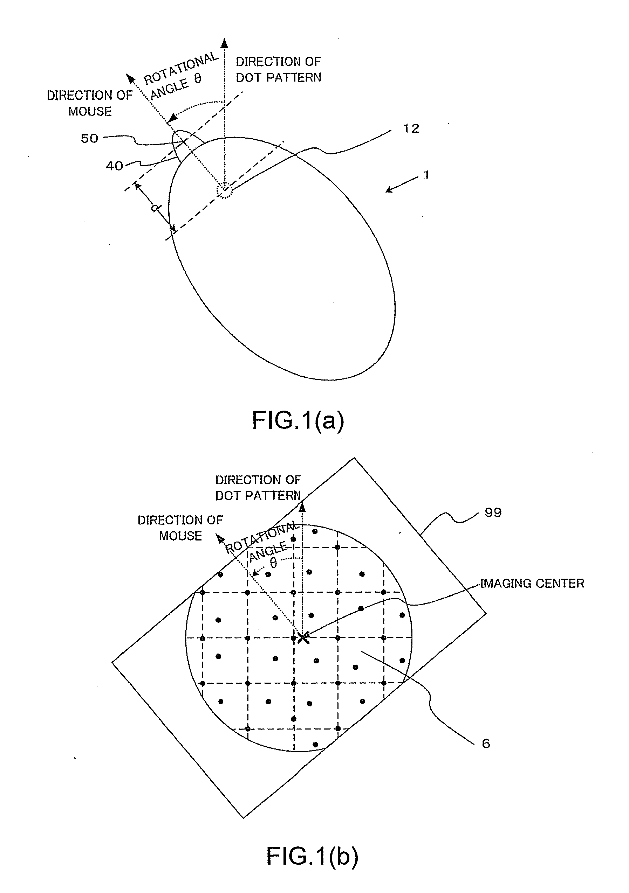

A first embodiment of a mouse according to the present invention will be described below with reference to Figs. 1 to 16.

<Outline and Example of Use>

The present invention will be first described by an example of use to easily grasp its content.

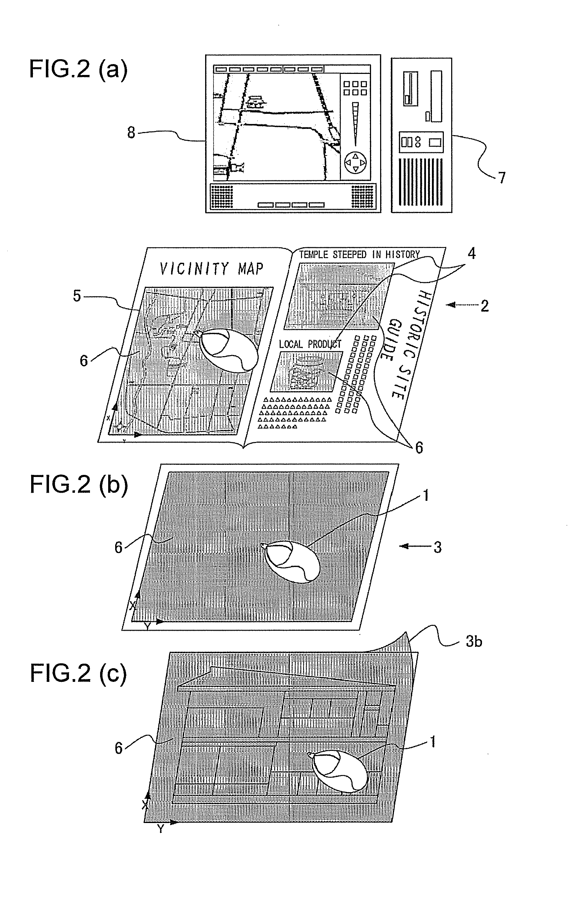

Fig. 2 illustrates an example of use of a mouse 1 according to the present embodiment. Fig. 2 (a) illustrates how the mouse 1, together with a book 2, is used, Fig. 2 (b) illustrates how the mouse 1, together with a grid pad 3, is used, and Fig. 2 (c) illustrates how the mouse 1, together with a grid sheet 3b, is used.

In an example illustrated in Fig. 2 (a), a picture 4, a map 5, and so on are printed on a space of the book 2. A dot pattern 6 (described below) using a grid as a basis is overlaid and printed on the picture 4 and the map 5. The dot pattern 6 enables a code value and/or XY coordinate values to be defined. A predetermined code value is embedded in the picture 4, and a particular code value and XY coordinate values are embedded in the map 5.

The mouse 1 enables switching between a mouse mode in which it functions as a normal mouse and a dot pattern reading mode (hereinafter referred to as a grid mode) in which the dot pattern 6 can be read. The modes may be switched by a switch dedicated to mode switching to be provided in the mouse 1 or simultaneously long-pressing right and left buttons in the mouse 1 (continuing to press the right and left buttons for approximately three seconds). The modes may be switchable in response to a signal from an information processing apparatus.

Further, the grid mode can be used by being subdivided into a mode using only XY coordinates defined in the dot pattern 6, a mode using only a code value, and a mode using both XY coordinate values and a code value depending on setting by a user or a program for a control device.

When a map 5 on which a particular location is displayed in enlarged fashion is displayed on a screen 8 of an information processing apparatus 7, the user brings the mouse 1 into a grid mode, to put the mouse 1 on the map 5, match a target position with a target 50 (position designation means), described below, while viewing the target position, and click the left button. Consequently, a medium and a map, on which dots are printed, are specified by a code value, and a location on the map is determined by XY coordinate values. By the input information, the map on which the designated location is enlarged can be used as displayed on the screen 8.

When an image and a sentence related to the picture 4, for example, are displayed on the screen 8, if the user brings the mouse 1 into a grid mode, to put an imaging hole 12 on the picture 4, and click the left button, a code value is read, and information related thereto is displayed.

In an example illustrated in Fig. 2 (b), the mouse 1, together with the grid pad 3 having the dot pattern 6 representing XY coordinate values printed thereon, is used.

When the mouse 1 is used like a pen tablet, for example, the user uses the mouse 1 after bringing the mouse 1 into a grid mode, to put the mouse 1 on the grid pad 3 and perform calibration processing for matching four corners of the grid pad 3 and four corners of a monitor using a method generally performed as initial setting. After the calibration processing, an absolute position is input using the grid pad 3. In this case, a mouse pad itself can be allocated a code value, and input management of a user, a date, and so on can be performed using the mouse pad.

In an example illustrated in Fig. 2 (c), a method using the mouse 1 as a digitizer is illustrated.

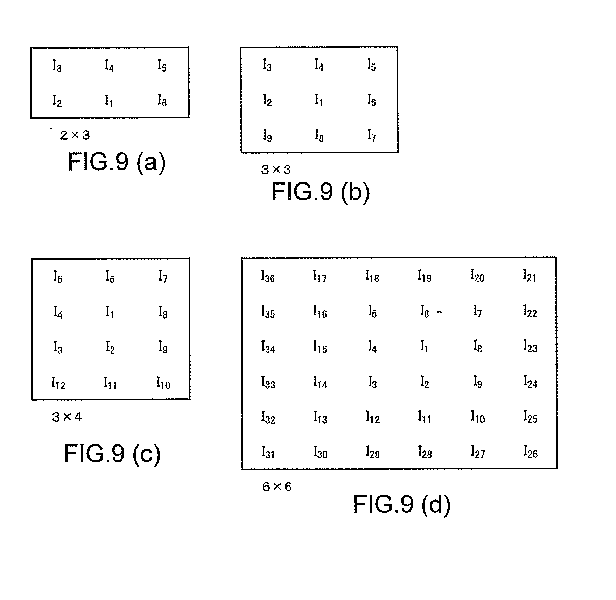

When graphic information on a figure 9 is digitized to use the graphic information by a computer-aided design (CAD) or the like, a transparent sheet provided with the dot pattern 6 in which at least XY coordinate values are defined (hereinafter referred to as a grid sheet 3b) is overlaid on the figure 9 to be digitized, a dot and a line on the figure 9 are designated while being viewed over the grid sheet 3b, and the graphic information is input.

The dot pattern 6 in which XY coordinate values are defined can also be directly printed using an inkjet printer or the like on the figure 9 and digitized in addition to a method for overlaying the grid sheet 3b on the figure 9.

When switching means switches the mouse 1 to a mouse mode even in any way of use, the mouse 1 can be used as a normal mouse. In the mouse mode, input information relating to functions of a general mouse, i.e., a left button operation, a right button operation, a wheel operation, and a position movement amount can be sent to the information processing apparatus.

<As to configuration of mouse 1>

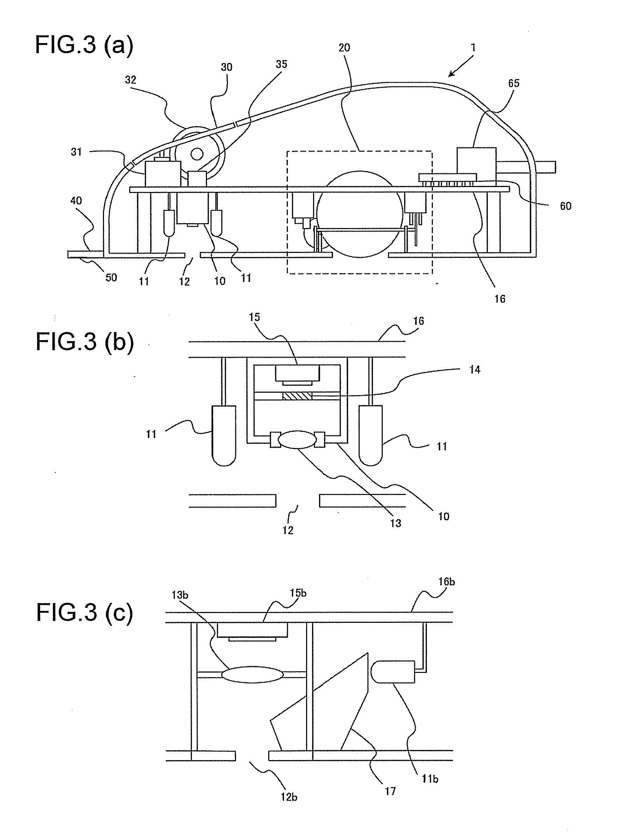

Fig. 3 illustrates an example of a configuration of the mouse 1. Fig. 3 (a) is a cross-sectional view of the mouse 1 having a mechanical mouse function, Fig. 3 (b) is an enlarged sectional view of the dot pattern reading unit 10, and Fig. 3 (c) is an enlarged sectional view of a movement amount/direction detection unit 20b serving as an optical reading unit in a mouse 1b having an optical mouse function.

As illustrated in Fig. 3 (a), the mouse 1 includes a movement/direction detection unit 20, a button 30, a button operation detection unit 31, a wheel 32, a wheel operation detection unit 35, a control unit 60, and a sending unit 65 for implementing a normal mouse function. A function of each of the units for implementing the mouse function is similar to that in a normal mouse, and hence the description thereof is omitted.

The mouse 1 further includes a dot pattern reading unit 10, an infrared light emitting diode (IR-LED) 11 serving as dot pattern irradiation means, an extension unit 40, and a target 50 (position designation means), which are used in a grid mode.

The dot pattern reading unit 10 will be described below.

The target 50 is provided as the position designation means in the extension unit 40, and is used to be accurately matched, when the user designates a predetermined position on a medium using the mouse 1, with the predetermined position by viewing.

The extension unit 40 is used to arrange the target 50 outside a main body of the mouse 1, and is provided in a shape projecting by a little less than 1 cm forward from the main body of the mouse 1, for example. The extension unit 40 may desirably be transparent or translucent so that the predetermined position on the medium and the target 50 are matched with each other by seeing through the extension unit 40.

The target 50 may desirably be provided on a lower surface of the mouse 1 so that it is not shifted from a viewing position depending on the thickness of the extension unit 40.

In this example, mode switching is performed by long press of right and left buttons in the mouse 1, and a dedicated switch is not provided.

Fig. 3 (b) illustrates details of an example of the dot pattern reading unit 10.

The dot pattern reading unit 10 includes an IR-LED 11, a reading hole 12, a lens 13, an infrared (IR) filter 14, a complementary metal oxide semiconductor (CMOS) sensor 15, and a Printed Circuit Board (PCB) 16.

The IR-LED 11 is an LED for emitting infrared rays. A medium on which the mouse 1 is put is irradiated with the infrared rays emitted from the IR-LED 11 through the reading hole 12 provided at the bottom of the mouse 1. The medium includes a grid pad 3, a picture 4, a map 5, and a grid sheet 3b.

The infrared rays reflected from the medium are detected as an image including a dot pattern in the CMOS sensor 15 after passing through the reading hole 12, the lens 13, and the IR filter 14. The detected image is sent to the control unit 60.

The reading hole 12 is circular in shape, for example. The reading hole 12 may have a diameter in which an image can be appropriately captured in the CMOS sensor 15, e.g., a diameter of approximately 4 mm. The shape of the reading hole 12 may be a rectangle having a similar area.

The PCB 16 is used to hold each of the units and couple the units.

In this example, infrared rays are used to read the dot pattern. The IR filter 14 for removing components other than an infrared component is used so that the dot pattern can be appropriately read even if light reflected from the medium includes the component other than the infrared component. This example presumes a configuration in which a medium surface provided with a dot pattern reflects infrared rays, and each of dots composing the dot pattern does not reflect infrared rays or a configuration in which a medium surface does not reflect infrared rays, and each of the dots reflects infrared rays.

When ultraviolet rays are used for reading, for example, a ultraviolet (UV) filter may be used.

Since the bottom of the mouse 1 and the medium may conceivably adhere to each other, light entering from the reading hole 12 is generally only infrared rays emitted by the IR-LED 11. In the case, the IR filter 14 may be omitted.

While a configuration of a mechanical mouse has been illustrated as to a mouse function in the above-mentioned example, the mouse function may be implemented by a configuration of an optical mouse illustrated in Fig. 3 (c). In this case, the dot pattern reading unit 10 and a movement amount/direction detection unit 20b serving as an optical reading unit may be combined into one unit.

Fig. 3 (c) illustrates details of the movement amount/direction detection unit 20b (optical reading unit) with a mouse function made optical.

The movement amount/direction detection unit 20b includes an LED 11b, a prism 17, a reading hole 12b, a lens 13b, a sensor 15b, and a PCB 16b.

The dot pattern reading unit 10 and the movement amount/direction detection unit 20b can be combined into one unit by combining the IR-LED 11 and the LED 11b, combining the lens 13 and the lens 13b, and combining the CMOS sensor 15 and the sensor 15b. The number of components can be reduced by combining the units.

<As to method for calculating coordinate position of target 50>

Fig. 1 illustrates a relationship between a predetermined position designated by the target 50 (position designation means) and a position of the reading hole 12 read by the dot pattern reading unit 10. Fig. 1 (a) illustrates a positional relationship between the target 50 and the reading hole 12 when the mouse 1 is viewed from the top, and Fig. 1 (b) illustrates a relationship between a direction of the dot pattern 6 on a medium surface imaged by the CMOS sensor 15 and a direction of the mouse 1.

In the present invention, the dot pattern 6 at a position of an imaging center at the bottom of the mouse 1 is actually read while viewing the position designated by the target 50, and the position designated by the target 5 is found by calculation from XY coordinate values of the read dot pattern 6 and the direction of the dot pattern 6.

The dot pattern 6 used in the present embodiment has directivity, as described below. In Fig. 1 (a), the direction of the dot pattern 6 is an upward direction.

A direction of the mouse 1 is a direction in which a frame buffer of a captured image 99 is directed upward when the dot pattern 6 is imaged, for example, and may be previously determined.

As illustrated in Fig. 1 (a), a distance d between the position of the imaging center in the reading hole 12 and the position of the target 50 is determined as a value specific to the mouse 1 because the position of the target 50 and a position of the reading hole 12 are fixed.

An angle between a direction of the dot pattern 6 and a direction of the mouse 1 is a mouse rotational angle θ. The mouse rotational angle has a counterclockwise direction as its positive direction.

As illustrated in Fig. 1 (b), the direction of the dot pattern 6 is first found by analyzing arrangement positions of dots composing the dot pattern 6 included in the captured image 99 obtained by the CMOS sensor 15.

Since the direction of the mouse 1 is fixed as the direction of the frame buffer of the captured image 99 in this example, the mouse rotational angle θ can be then found based on the found direction of the dot pattern 6 and the direction of the mouse 1.

Letting coordinate values (Xt, Yt) be XY coordinate values at the position on the medium designated by the target 50, and letting coordinate values (X, Y) be XY coordinate values on the medium of the reading hole 12, the coordinate values (Xt, Yt) are found by the following equation using the coordinate values (X, Y), the distance d, and the mouse rotational angle θ.

$$\text{Equation 1}$$

$$\begin{pmatrix} Xt \\ Yt \end{pmatrix} = \begin{pmatrix} X \\ Y \end{pmatrix} + d \begin{pmatrix} -\sin\theta \\ \cos\theta \end{pmatrix}$$

<As to dot pattern 6>

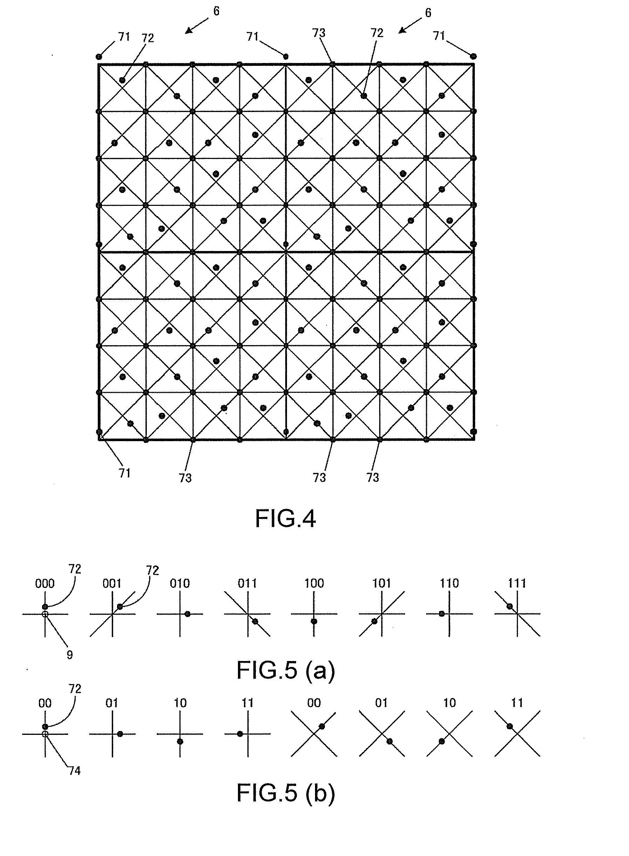

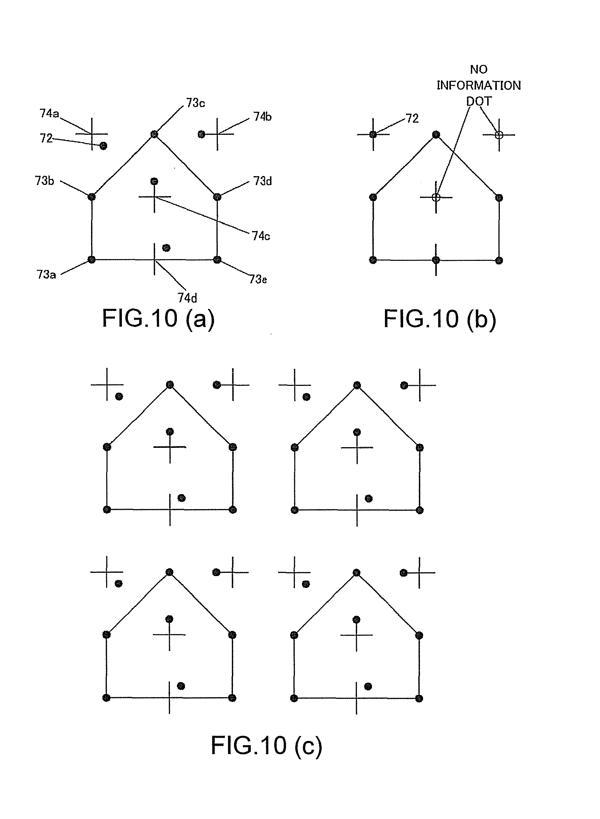

An example of the dot pattern 6 (hereinafter referred to as GRID 1) used in the present embodiment will be described with reference to Figs. 4 to 9. An example of another dot pattern 6b (hereinafter referred to as GRID 5) will be described with reference to Fig. 10. In those figures, grid lines in longitudinal, lateral, and oblique directions are attached for convenience of illustration, and do not exist on an actual printing surface.

Fig. 4 illustrates constituent elements of the dot pattern 6 and their positional relationship. The dot pattern 6 includes key dots 71, information dots 72, and reference point dots 73.

The dot pattern 6 is generated by arranging fine dots, i.e., the key dots 71, the information dots 72, and the reference point dots 73 according to a predetermined rule to recognize numerical information by a dot code generation algorithm.

As illustrated in Fig. 4, a block of the dot pattern 6 representing information has 5 × 5 reference point dots 73 arranged therein using the key dots 71 as a basis and has information dots 72 each arranged around a virtual reference point at the center surrounded by the four reference point dots 73. Any numerical information is defined in the block. Fig. 4 illustrates a state where four blocks (in a heavy-line frame) of the dot pattern 6 are arranged in a line. Needless to say, the dot pattern 6 is not limited to the four blocks.

The key dots 71 are arranged by being respectively shifted in a predetermined direction from the four reference point dots 73 at four corners of the block, as illustrated in Fig. 4. The key dots 71 are representative points of the dot pattern 6 corresponding to one block including the information dots 72. For example, the key dots 71 are shifted by 0.1 mm upward from the reference point dots 73 at the four corners of the block of the dot pattern 6. However, this numerical value is not limited to this, and can be varied depending on whether the block of the dot pattern 6 is large or small.

The key dot 71 may desirably be shifted by approximately 20 % of grid spacing to avoid being falsely recognized as the reference point dot 73 and the information dot 72.

The information dot 72 is a dot for recognizing various types of information. With the center of a grid surrounded by the four reference point dots 73 used as a virtual reference point, the information dot 72 is arranged at a final point represented by a vector using the virtual reference point as a starting point.

A distance between the information dot 72 and the virtual reference point surrounded by the four reference point dots 73 may desirably be approximately 15 to 30 % of a distance between the adjacent virtual reference points. If the distance between the information dot 72 and the virtual reference point is closer than this distance between the adjacent virtual reference points, the dots are easy to visually recognize as a large mass, which is visually undesirable as the dot pattern 6. Conversely, if the distance between the information dot 72 and the virtual reference point is farther than this distance between the adjacent virtual reference points, it becomes difficult to recognize whether the information dot 72 has vector directivity using either one of the adjacent virtual reference points as a starting point.

When the reference point dot 73 accepts the dot pattern 6 as image data using a scanner, distortion of a lens of the scanner and oblique imaging, expansion and contraction of paper, curvature of a medium surface, and distortion during printing can be corrected. More specifically, a correcting function (Xn, Yn) = f (Xn', Yn') for converting the shape of the distorted four reference point dots 73 into its original square is found, and the information dot 72 is corrected using the same function, to find a vector of the correct information dot 72.

When the reference point dots 73 are arranged in the dot pattern 6, distortion, caused by the scanner, of image data obtained by accepting the dot pattern 6 with the scanner is corrected. When the image data serving as the dot pattern 6 is accepted with a popular scanner with a lens having a high distortion rate, therefore, an arrangement of dots can be accurately recognized. Even if the dot pattern 6 is read with the scanner inclined with respect to a surface of the dot pattern 6, the dot pattern 6 can be accurately recognized.

The key dots 71, the information dots 72, and the reference point dots 73 may desirably be printed using invisible ink or carbon ink that absorbs infrared rays when the scanner reads dots by irradiation with the infrared rays.

When a normal inkjet printer or the like prints the dot pattern 6, a distance between the reference point dots 73 (i.e., the size of a grid) may be approximately 0.5 mm. In the case of offset printing, the distance may be a minimum of approximately 0.3 mm.

When the dot pattern 6 is formed using an exposure technique or the like in semiconductor manufacturing processes, the distance between the reference point dots 73 may be approximately several micrometers. If a design rule in a unit of nanometers is used, the dot pattern 6 which has more minute distance between dots can be formed.

The distance between the reference point dots 73 may be any value depending on uses of the dot pattern 6 if it is the above-mentioned minimum value or more.

The respective diameters of the key dot 71, the information dot 72, and the reference point dot 73 may desirably be approximately 10 % of the distance between the reference point dots 73.

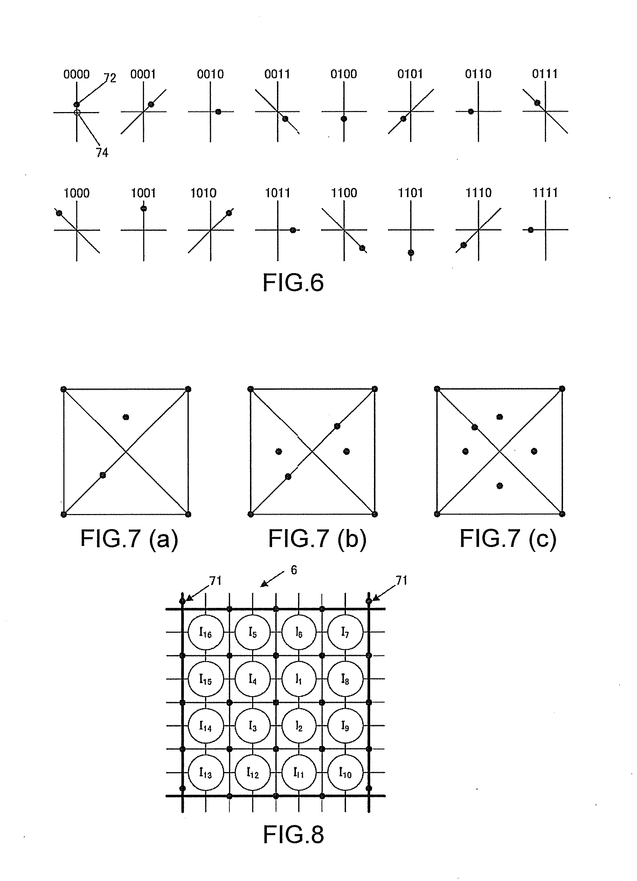

Figs. 5 and 6 illustrate an example of an information definition method by a method for arranging the information dot 72. Figs. 5 and 6 are enlarged views illustrating a position of the information dot 72 and an example of bit display of information defined by the position.

Fig. 5 (a) illustrates an example of a definition method in which an information dot 72 is shifted by a distance (e.g., 0.1 mm) from a virtual reference point 74 so as to have a direction and a length represented by a vector, and is rotated through 45 degrees in a clockwise direction, to arrange information dots 72 in eight directions so that 3-bit information is represented. In this example, the dot pattern 6 includes 16 information dots 72 per block so that information composed of 48 bits (3 bits × 16) can be represented.

Fig. 5 (b) illustrates an example of a method for defining an information dot 72 having 2-bit information for each grid in the dot pattern 6. In this example, the information dot 72 is shifted from a virtual reference point 74 in a plus (+) direction and an oblique (×) direction, to define 2-bit information for the information dot 72. In this definition method, data composed of 32 bits (2 bits × 16 grids) can be applied by dividing one block into grids to be shifted in a plus (+) direction and grids to be shifted in an oblique (×) direction depending on uses, unlike in the definition method illustrated in Fig. 5 (a) (in which 48-bit information can originally be defined).

When a way of shifting in a plus (+) direction and a way of shifting in an oblique (×) direction are combined for each grid as a combination of directions to shift the information dots 72 arranged in the 16 grids included in one block, a maximum of $2^{16}$ (approximately 65000) dot pattern formats can be implemented.

Fig. 6 illustrates an example of a method for defining information in another method for arranging the information dots 72. In this definition method, when the information dot 72 is arranged, amounts of shift from the virtual reference point 74 surrounded by the reference point dots 73 are of two types; large and small shift amounts, and the number of vector directions is eight. Therefore, 16 types of arrangements can be defined, and 4-bit information can be represented.

When the definition method is used, the larger shift amount and the smaller shift amount may desirably be approximately 25 to 30 % and approximately 15 to 20 % of a distance between the adjacent virtual reference points 74, respectively. Even when directions to shift the information dots 72 by the large shift amount and the small shift amount are the same, however, the centers of the information dots 72 may desirably be spaced apart by a distance larger than the diameter of the information dots 72 so that the information dots 72 can be distinguished and recognized.

A method for defining 4-bit information is not limited to the above-mentioned definition method. The information dots 72 can also be arranged in 16 directions to represent four bits. Needless to say, various changes can be made.

Fig. 7 illustrates an example of a method for defining information by a method for arranging a plurality of information dots 72 per grid. Fig. 7 (a) illustrates an example in which two information dots 72 are arranged, Fig. 7 (b) illustrates an example in which four information dots are arranged, and Fig. 7 (c) illustrates an example in which five information dots 72 are arranged.

The number of information dots 72 per grid surrounded by the four reference point dots 73 may desirably be one in consideration of appearance. If it is desired to increase an information amount by ignoring appearance, however, a large amount of information can be defined by allocating one bit per vector and representing the information using a plurality of dots as the information dots 72. In vectors in eight directions of a concentric circle, for example, $2^8$ information per grid can be represented, and $2^{128}$ information per block including 16 grids can be represented.

The dot pattern 6 is recognized by accepting the dot pattern 6 as image data using a scanner, first extracting the reference point dots 73, then extracting the key dots 71 because the reference point dots 73 are not in their proper positions, and then extracting the information dots 72.

Fig. 8 illustrates an example of a format used to extract the information dots 72 from the dot pattern 6. Fig. 8 illustrates an example of a format in which grids I1 to I16 are arranged in a spiral shape in a clockwise direction from the center of a block. In Fig. 8, I1 to I16 respectively represent arrangements of the grids, and respectively represent, when the number of information dots 72 included in each of the grids is one, arrangement locations of the information dots 72 in the grids.

Fig. 9 illustrates an example of another arrangement of grids including information dots 72. Fig. 9 (a) illustrates an example in which six (2 × 3) grids are arranged in one block, Fig. 9 (b) illustrates an example in which nine (3 × 3) grids are arranged in one block, Fig. 9 (c) illustrates an example in which 12 (3 × 4) grids are arranged in one block, and Fig. 9 (d) illustrates an example in which 36 grids are arranged in one block. Thus, in the dot pattern 6, the number of grids included in one block is not limited to 16. Various changes can be made.

More specifically, an amount of information that can be recorded in the dot pattern 6 can be flexibly adjusted by adjusting the number of grids included in one block and the number of information dots 72 included in one grid depending on whether a required information amount is large or small or the resolution of a scanner.

Fig. 10 illustrates an example of the other dot pattern 6b (GRID 5). Fig. 10 (a) illustrates a positional relationship among reference point dots 73a to 73e, virtual reference points 74a to 74d, and the information dots 72 in the dot pattern 6b.

A direction of the dot pattern 6b is defined by a shape of a block. In the GRID 5, the reference point dots 73a to 73e are first arranged. A shape representing a direction of the block (a pentagon directed upward) is defined by a line connecting the reference point dots 73a to 73e in this order. The virtual reference points 74a to 74d are then defined based on an arrangement of the reference point dots 73a to 73e. A vector having a direction and a length is then defined using each of the virtual reference points 74a to 74d as its starting point. Finally, the information dot 72 is arranged at a final point of the vector.

In the GRID 5, the direction of the block can thus be defined by a way for arranging the reference point dots 73a to 73e. The direction of the block is defined so that the size of the whole block is also be defined.

Fig. 10 (b) illustrates an example in which information is defined depending on whether the information dot 72 exists on each of the virtual reference points 74a to 74d in the block.

Fig. 10 (c) illustrates an example in which blocks in the GRID 5 are connected two by two in each of longitudinal and lateral directions. However, a direction in which the blocks are connected and arranged is not limited to the longitudinal and lateral directions. For example, the blocks may be arranged and connected in any direction.

While the reference point dots 73a to 73e and the information dot 72 all have the same shape in Fig. 10, the reference point dots 73a to 73e and the information dot 72 may respectively have different shapes. For example, the reference point dots 73a to 73e may have shapes larger than that of the information dot 72. The reference point dots 73a to 73e and the information dot 72 may have any shape if they can be identified, for example, a circular, triangular, square, or polygonal shape.

<As to format of dot code>

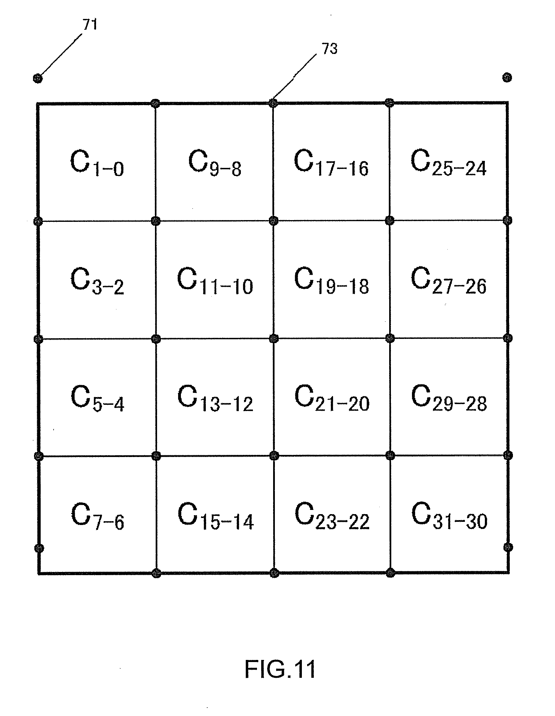

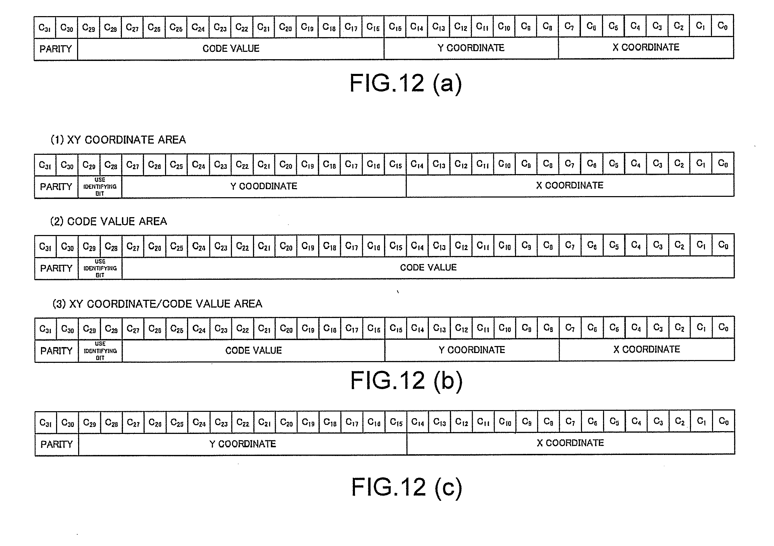

An example of a dot code and its formats will be described with reference to Figs. 11 and 12. The dot code is information recorded in the dot pattern 6.

Fig. 11 illustrates an example of a format of information bits in one block of the dot pattern 6. In this example, 2-bit information is recorded per grid. For example, in the upper left grid, bits $C_0$ and $C_1$ are defined in a manner that uses the bit $C_1$ as an upper bit. The two bits are collectively indicated as $C_{1-0}$. The bits may be recorded by one information dot 72 per grid, or may be recorded by a plurality of information dots 72 per grid.

Fig. 12 illustrates an example of a format of a dot code. In this example, the dot code has a length corresponding to 32 bits, and is represented by bits $C_0$ to $C_{31}$.

Fig. 12 (a) illustrates an example of a format in which a dot code includes XY coordinate values, a code value, and a parity, Fig. 12 (b) illustrates an example in which the format is changed depending on a place where the dot pattern 6 is provided, and Fig. 12 (c) illustrates an example of a format in which a dot code includes XY coordinate values and a parity.

In the example of the format illustrated in Fig. 12 (a), an X-coordinate value and a Y-coordinate value of a position where the dot pattern 6 is provided are represented, respectively, using eight bits $C_0$ to $C_7$ and eight bits $C_8$ to $C_{15}$, respectively. Then, the code value is represented using 14 bits $C_{16}$ to $C_{29}$. The code value can be used to represent any information according to the purpose of use of the dot pattern 6. In the present embodiment, the code value can be used to represent a document identification (ID). Finally, two bits $C_{30}$ and $C_{31}$ are used as the parity in the dot code. A method for calculating the parity may be a generally known method, and hence the description thereof is omitted.

In the example of the format illustrated in Fig. 12 (b), the format is changed depending on a place where the dot pattern 6 is provided. In this example, the place where the dot pattern 6 is provided is partitioned into an XY coordinate area, a code value area, and an XY coordinate/code value area. In the XY coordinate area, an XY coordinate area format is used. In the code value area, a code value area format is used. In the XY coordinate/code value area, an XY coordinate/code value area format is used.

In the XY coordinate area format, an X-coordinate is represented using 14 bits $C_0$ to $C_{13}$, and a Y-coordinate is represented using 14 bits $C_{14}$ to $C_{27}$. In the code value area format, a code value is represented using 28 bits $C_0$ to

$C_{27}$. In the XY coordinate/code value area format, an X-coordinate is represented using 8 bits $C_0$ to $C_7$, and a Y-coordinate value is represented using 8 bits $C_8$ to $C_{15}$, and a code value is represented using 12 bits $C_{16}$ to $C_{27}$.

A bit sequence of $C_{29}$ and $C_{29}$ is considered as a use identifying bit, for example, in order to be able to distinguish which of XY coordinate values, a code value, and XY coordinate and a code value is represented by read information. It may be determined that XY coordinates are included when $C_{29}$ is one, and are not included when it is zero, and a code value is included when $C_{29}$ is one, and is not included when it is zero. In this example, the use identifying bit is 10 in (1), 01 in (2), and 11 in (3) in Fig. 12 (b).

A bit sequence representation rule may be determined so that bit sequences respectively representing XY coordinate and a code value do not overlap each other in order to be able to distinguish which of XY coordinate values, a code value, and XY coordinate values and a code value is represented by read information.

In the example of the format illustrated in Fig. 12 (b), more bits can be allocated to XY coordinate values and a code value than those in the example of the format illustrated in Fig 12 (a). Therefore, XY coordinate values in a wider range and more code values can be represented.

In the example of the format illustrated in Fig. 12 (c), the same format as the XY coordinate area format illustrated in Fig. 12 (b) is used.

<As to functional block diagram>

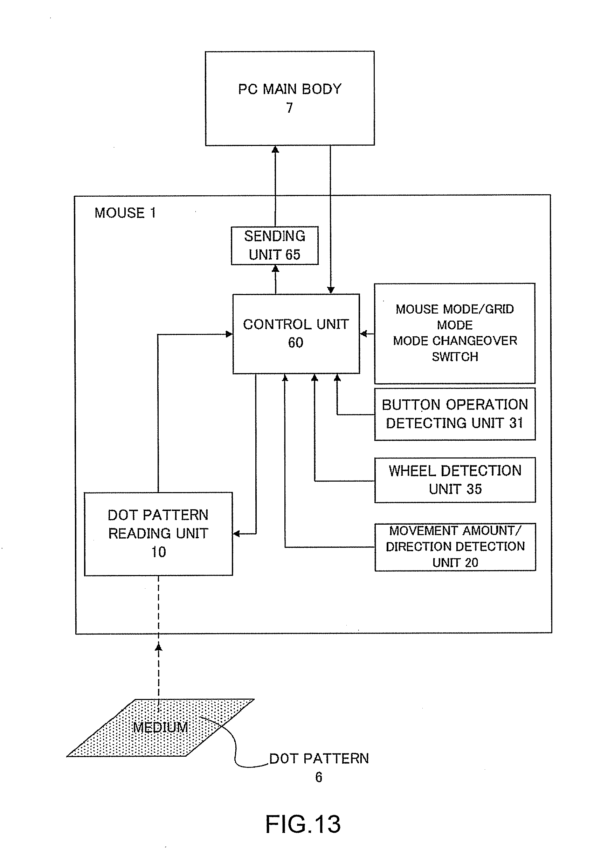

Fig. 13 is a functional block diagram of the mouse 1.

As illustrated in Fig. 13, the mouse 1 includes a control unit 60, a sending unit 65, a dot pattern reading unit 10, a mode changeover switch, right and left buttons, a wheel detection unit 35, and a movement amount/direction detection unit 20.

The dot pattern reading unit 10 images a medium surface as image data. The image data is sent to the control unit 60.

The mode changeover switch is used to switch between a mouse mode and a grid mode, and is operated by the user. This information is sent to the control unit 60. As described above, switching between the modes can be replaced with long press of a mouse button and the like. Therefore, the mode changeover switch need not necessarily be provided. When switching is performed by the user performing a keyboard operation and in response to a signal from the information processing apparatus 7 by an application, the changeover switch need not be provided either.

The movement amount/direction detection unit 20, the wheel detection unit 35, and a button operation detection unit 31 detect an operation performed by the user, and sends information relating to the operation to the control unit 60.

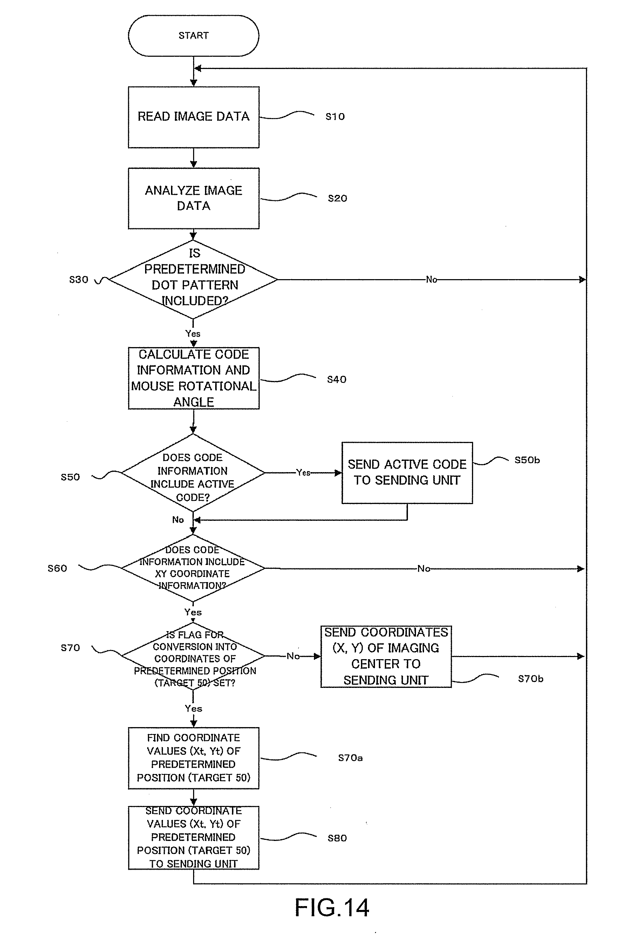

The control unit 60 receives image data from the dot pattern reading unit 10, and analyzes the image data. Details of an analysis procedure will be described below with reference to Fig. 14.

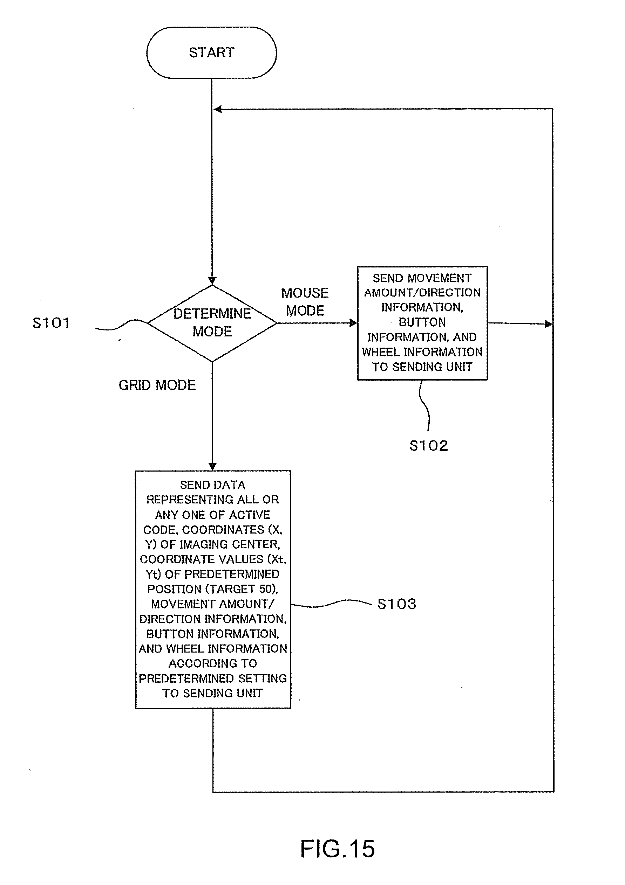

The control unit 60 receives the operation information sent from the mode changeover switch, the movement amount/direction detection unit 20, the wheel detection unit 35, and the button operation detection unit 31 and the image data from the dot pattern reading unit 10, analyzes them, and sends a result of the analysis to the sending unit 65. Details will be described below with reference to a flowchart of Fig. 15.

The control unit 60 may desirably perform control to turn off power to the dot pattern reading unit 10 or save power during a mouse mode.

The control unit 60 further analyzes a change of an image read per unit time by the dot pattern reading unit 10 if the dot pattern reading unit 10 functions as an optical reading unit in an optical mouse. A movement amount and a direction of the mouse 1 on a medium surface are sent to the information processing apparatus 7 based on a result of this analysis.

A dot pattern reading unit in the claims performs a function of an optical reading unit for detecting a movement amount and a direction of an optical mouse in addition to a function of reading a dot pattern, and a control unit also analyzes a change of an image read per unit time by the dot pattern reading unit in addition to calculating a predetermined position. By such a configuration, the dot pattern reading unit and the optical reading unit in the optical mouse can be combined into one unit so that the number of members can be reduced. This enables space saving inside the mouse.

A medium surface in the claims need not be provided with a dot pattern.

The sending unit 65 converts the information sent from the control unit 60 into an electrical signal, an infrared signal, a radio signal, or the like, and sends the signal to the information processing apparatus 7.

<As to analysis algorithm for control unit>

Fig. 14 illustrates a flowchart of analysis of code information.

The dot pattern reading unit 10 images a medium surface as image data. The image data is sent to the control unit 60.

The control unit 60 reads the image data sent from the dot pattern reading unit 10 (S10), analyzes the image data (S20), and determines whether the image data includes a predetermined dot pattern (S30). If the image data includes the predetermined dot pattern, the control unit 60 calculates code information and a mouse rotational angle (S40). If the image data does not include the predetermined dot pattern, the processing returns to S10.

The control unit 60 then determines whether the code information includes an active code (S50). If the code information includes the active code, the control unit 60 sends the active code to a sending unit (S50b), and the processing proceeds to S60. If the code information does not include the active code, the processing proceeds to S60.

The active code means a code value used in an operating system (OS) that operates by an information processing apparatus, each application, or the like, which is included in the code information.

The control unit 60 then determines whether the code information includes XY coordinates (S60). If the code information includes the XY coordinates, the processing proceeds to S70. If the code information does not include the XY coordinates, the processing returns to S10.

The control unit 60 then determines whether a flag for conversion into coordinates of the target 50 is set (S70). If the flag is set, the control unit 60 finds the coordinates of the target 50 (S70a), and sends the coordinates to a sending unit (S80). If the flag is not set, the control unit 60 sends coordinates of an imaging center to the sending unit (S70b). The flag is determined in advance by the user or the application.

The dot pattern reading unit 10 always captures image data, and sends the image data to the control unit 60, which is not illustrated. The control unit 60 may perform processing using the above-mentioned analysis algorithm, or may perform analysis only in the case of the grid mode. The latter enables power saving of the mouse 1.

<As to sending algorithm for control unit>

Fig. 15 illustrates a flowchart of an algorithm relating to sending of the control unit 60.

As illustrated in Fig. 15, the control unit 60 determines the current mode (S101), and selects information conforming to the mode and sends the information to the sending unit 65 (S102, S103).

More specifically, in the case of the mouse mode, the control unit 60 sends, out of information sent to the control unit 60, information relating to a function of a normal mouse, i.e., information relating to an operation of the right and left buttons, information relating to a wheel operation, and information relating to a relative position to the sending unit. In the case of the grid mode, the control unit 60 sends, out of an active code, coordinates (X, Y) of the imaging center, and coordinate values (Xt, Yt) of the target 50 in addition to the information relating to an operation of the right and left buttons, the information relating to a wheel operation, and the information relating to a relative position, a signal found according to predetermined setting to the sending unit.

The predetermined setting is setting determined in advance as to which information is to be sent from the mouse. The predetermined setting may be setting optionally performed by the user using a predetermined operation, for example. Alternatively, the predetermined setting may be setting determined by an application installed in the information processing apparatus 7.

As described above, the grid mode may be subdivided into a mode using only XY coordinate defined in the dot pattern 6, a mode using only a code value, and a mode using both XY coordinate values and a code value depending on setting by the user or a program for the control device. In the case, the grid mode may be implemented when the control unit selects output information conforming to each of the modes in step S103, which is not illustrated.

<As to shape of position designation means>

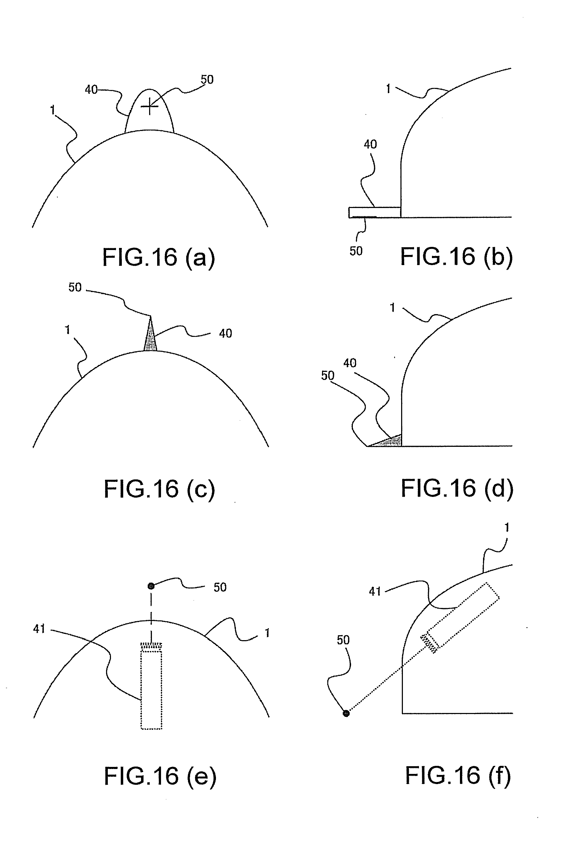

Fig. 16 illustrates various examples of position designation means. Figs. 16(a) and 16 (b) are respectively figures as viewed from the top and the left side of position designation means of a type using a transparent member. Figs. 16 (c) and 16(d) are respectively figures as viewed from the top and the left side of position designation means of a type provided with a square-shaped projection. Figs. 16 (e) and 16 (f) are respectively figures as viewed from the top and the left side of position designation means of a type using a laser pointer 41 serving as predetermined position irradiation means.

As illustrated in Fig. 16 (a), in the position designation means of a type using a transparent member, a + mark and a × mark or a ○ mark and a • mark are provided at its center, to clarify the target 50 (position designation means). As illustrated in Fig. 16(b), a mark in the position designation means of a type using a transparent member is printed below the extension unit 40, to prevent a point from being shifted due to the thickness of the transparent member.

As illustrated in Figs. 16 (c) and 16 (d), in the position designation means of a type provided with a square-shaped projection, a tip end of the square-shaped projection indicates the target 50.

As illustrated in Figs. 16 (e) and 16 (f), in the position designation means of a type using the laser pointer 41 in place of the extension unit, an irradiation position of a laser indicates the target 50.

<As to sending unit>

The sending unit 65 changes information sent from the control unit 60 into an electrical signal in the case of wired connection such as universal serial bus (USB) connection, or changes the information into an infrared signal or a Bluetooth signal, and outputs the signal to the information processing apparatus 7.

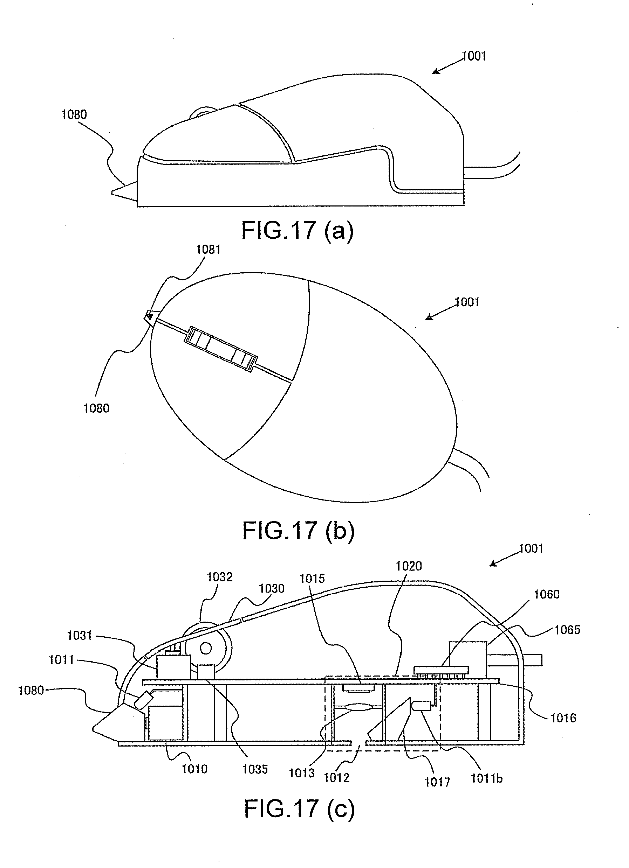

A second embodiment of a mouse according to the present invention will be described with reference to Figs. 17 to 21.

<Outline and example of use>

An example of use of a mouse 1001 according to the second embodiment is similar to the mouse 1 according to the first embodiment illustrated in Fig. 2, and hence the description is not omitted.

<As to configuration of mouse 1001>

Fig. 17 illustrates an example of a configuration of the mouse 1001. Fig. 17(a) illustrates the mouse 1001 as viewed from the side, Fig. 17 (b) illustrates the mouse 1001 as viewed from the top, and Fig. 17 (c) is a cross-sectional view of the mouse 1001 having an optical mouse function.

As illustrated in Fig. 17 (a), a prism 1080 including a dot pattern input unit is arranged to project outward at the front of a casing of the mouse 1001. For example, the prism 1080 including the dot pattern input unit has a shape projecting by approximately 5 mm forward from a main body of the mouse 1001.

As illustrated in Fig. 17 (b), a target mark 1081 having infrared permeability is provided on an upper surface of the prism 1080 including the dot pattern input unit. The target mark 1081 is used, when a user designates a particular position using the mouse 1001, to accurately match a position of the mouse 1001 with the particular position by viewing.

As illustrated in Fig. 17 (c), the mouse 1001 includes a movement amount/direction detection unit 1020 serving as an optical reading unit 1020, a button operation detection unit 1030, a wheel operation detection unit 1035, a control unit 1060, and a sending unit 1065 to implement a normal mouse function. A function of each of the units for implementing the mouse function is similar to that in a normal mouse, and hence the description thereof is not omitted.

The mouse 1001 may further include a dot pattern reading unit 1010, a prism 1080 including a dot pattern input unit, and a target 1081, which are used in a grid mode.

The dot pattern reading unit 1010, similar to the above-mentioned dot pattern reading unit 10, is transversely arranged. Its configuration is similar to that illustrated in Fig 3 (b), and hence the description thereof is not omitted.

An image captured by a CMOS sensor is an image that has been totally reflected once on an inner surface of the prism 1080 including the dot pattern input unit, as described below. Therefore, an analysis algorithm performs mirror image processing.

In this example, mode switching is performed by long press of right and left buttons in the mouse 1001, for example, and a dedicated switch is not provided.

The movement amount/direction detection unit 1020 serving as an optical reading unit includes at least an LED 1011, a prism 1017, a reading hole 1012, a lens 1013, a sensor 1015, and a PCB 1016.

The dot pattern reading unit 1010 and the movement amount/direction detection unit 1020 serving as an optical reading unit may be combined into one unit, like those in the first embodiment.

More specifically, the dot pattern reading unit 1010 and the movement amount/direction detection unit 1020 may be combined into one unit by combining the IR-LED 1011 and an LED 1011b, combining a lens 13 and the lens 1013, and combining a CMOS sensor 15 and the sensor 1015, for example. The number of components can be reduced by combining the units.

<As to positions of dot pattern reading unit, prism including dot pattern input unit, and IR-LED>

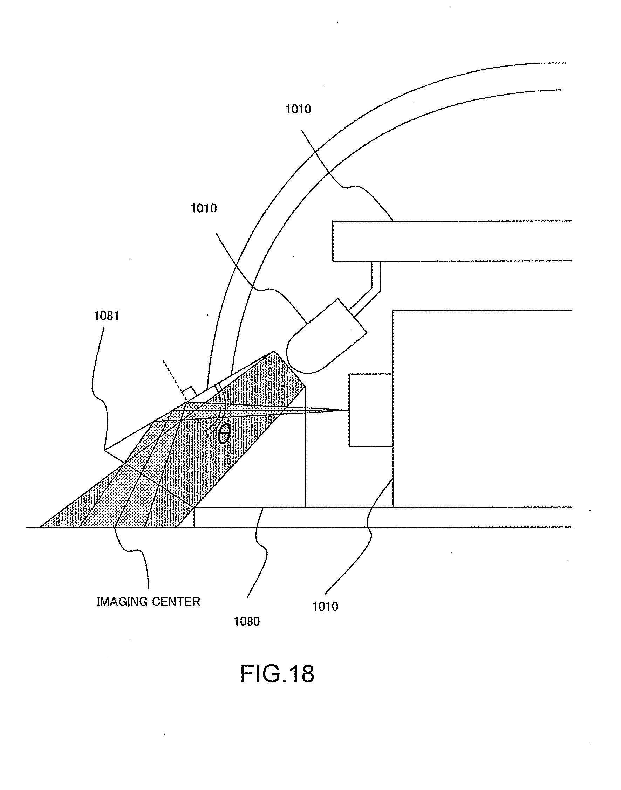

Fig. 18 illustrates respective positions of the dot pattern reading unit 1010, the prism 1080 including the dot pattern input unit, and the IR-LED 1011.

As illustrated in Fig. 18, the dot pattern reading unit 1010 is transversely arranged to capture an image totally reflected on the inner surface of the prism 1080 including the dot pattern input unit.

In order to totally reflect the image on the inner surface of the prism 1080 including the dot pattern input unit, θ illustrated in Fig. 18 is required to exceed a critical angle specific to a material for the prism. An angle of the prism 1080 including the dot pattern input unit and a position of the dot pattern reading unit 1010 are required to be determined to satisfy this condition. For example, θ is required to be larger than approximately 43 degrees when the material for the prism is glass, approximately 42 degrees when it is acryl, and approximately 39 degrees when it is polycarbonate.

The prism 1080 including the dot pattern input unit is arranged so that its tip end is positioned vertically just above an imaging center, for example. In such a configuration, the prism 1080 including the dot pattern input unit can double as position designation means. The prism 1080 including the dot pattern input unit may be provided with the target 1081.

As illustrated in Fig. 18, the IR-LED 1011 is arranged so that the whole range of a reading position can be sufficiently irradiated therewith.

<As to dot pattern 6>

A dot pattern is similar to that in the first embodiment, and hence the description thereof is not omitted.

<As to other positions of dot pattern reading unit 1010, prism 1080, and IR-LED 1011>

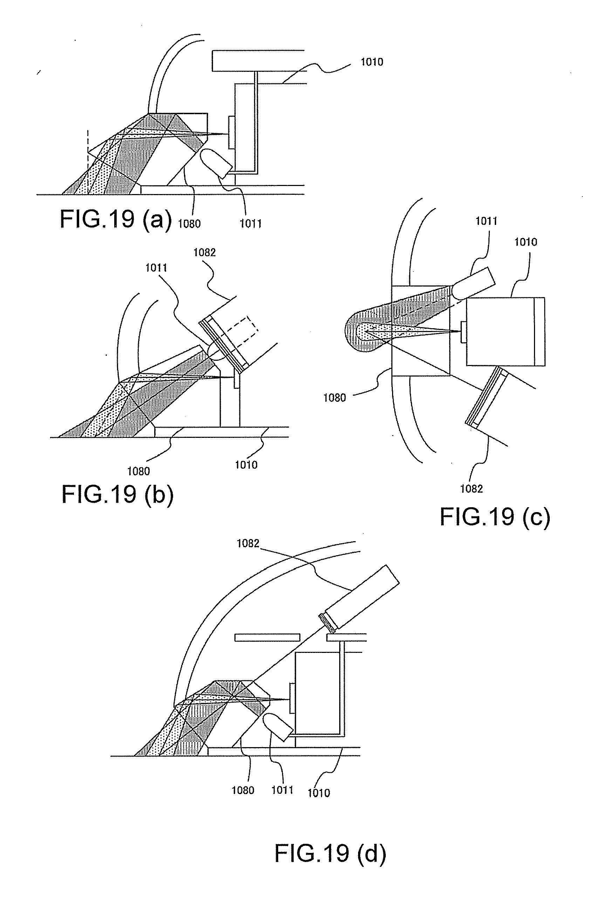

Fig. 19 is an arrangement plan of an arrangement, different from that described above, of positions of the dot pattern reading unit 1010, the prism 1080, and the IR-LED 1011. Fig. 19 (a) illustrates a mouse of a type in which the position of the IR-LED 1011 is changed into a lower position, Fig. 19 (b) illustrates a mouse of a type in which a reading position is pointed to by a laser beam using a laser pointer 1082, Fig. 19 (c) illustrates the mouse illustrated in Fig. 19 (b) as viewed from the top, and Fig. 19 (d) illustrates a mouse of a type in which a laser pointer 1082 and the IR-LED 1011 are respectively arranged above and below the dot pattern reading unit 1010.

As illustrated in Fig. 19 (a), the IR-LED 1011 can be arranged below the dot pattern reading unit 1010 by totally reflecting infrared light irradiated from the IR-LED 1011 and irradiating an imaging range with the infrared light. Thus, an arrangement position of the IR-LED 1011 can be freely designed.

As illustrated in Fig. 19 (b), the laser pointer 1082 can be used as means representing the reading position. In this case, the dot pattern reading unit 1010, the laser pointer 1082, and the IR-LED 1011 are required to be arranged not to overlap one another. Therefore, as illustrated in Fig. 19 (c), the laser pointer 1082 and the IR-LED 1011 are arranged, respectively, in spaces on the right side and the left side of the dot pattern reading unit 1010 not to overlap each other.

As illustrated in Fig. 19 (d), the laser pointer 1082 and the IR-LED 1011 can also be arranged, respectively, above and below the dot pattern reading unit 1010. In this case, the IR-LED 1011 can be arranged below the prism 1080 by totally reflecting infrared light irradiated therefrom.

Naturally, the laser beam irradiated from the laser pointer 1082 can be totally reflected on the inner surface of the prism 1080 to point to the reading position, which is not illustrated.

Thus, a variety of arrangement designs in the mouse 1001 are enabled using the reflection on the inner surface of the prism 1080.

<As to functional block diagram>

A functional block diagram is similar to the functional block diagram illustrated in Fig. 13, and hence the description thereof is not omitted.

<As to analysis algorithm for control unit>

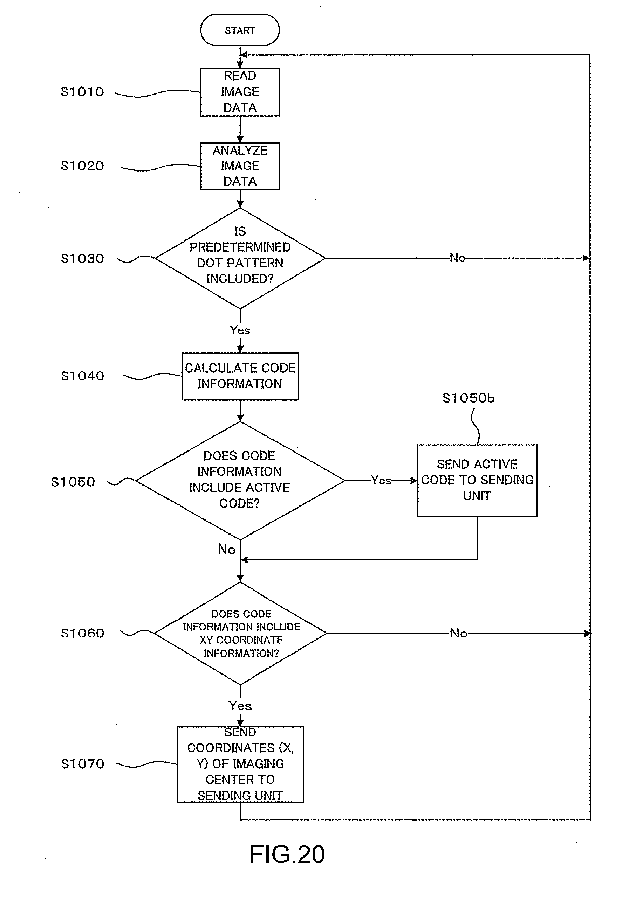

Fig. 20 illustrates a flowchart of algorithms for image data analysis and code information analysis.

The dot pattern reading unit 1010 images a medium surface as image data when the mouse 1001 is in the grid mode. The image data is sent to the control unit 1060.

The control unit 1060 reads the image data sent from the dot pattern reading unit 1010 (S1010 analyses the image data (S1020), and determines whether the image data includes a predetermined dot pattern (S1030). If the image data includes the predetermined dot pattern, the control unit 1060 calculates code information (S1040). If the image data does not include the predetermined dot pattern, the processing returns to S1010.

The control unit 1060 then determines whether the code information includes an active code (S1050). If the code information includes the active code, the control unit 1060 sends the active code to a sending unit (S1050b), and the processing proceeds to S1060. If the code information does not include the active code, the processing directly proceeds to S160.

The control unit 1060 then determines whether the code information includes XY coordinates (S1060). If the code information includes the XY coordinates, the processing proceeds to step S1070. In S1070, the control unit 1060 sends coordinates of an imaging center to the sending unit. If the code information does not include the XY coordinates, the processing returns to S1010.

<As to sending algorithm for control unit>

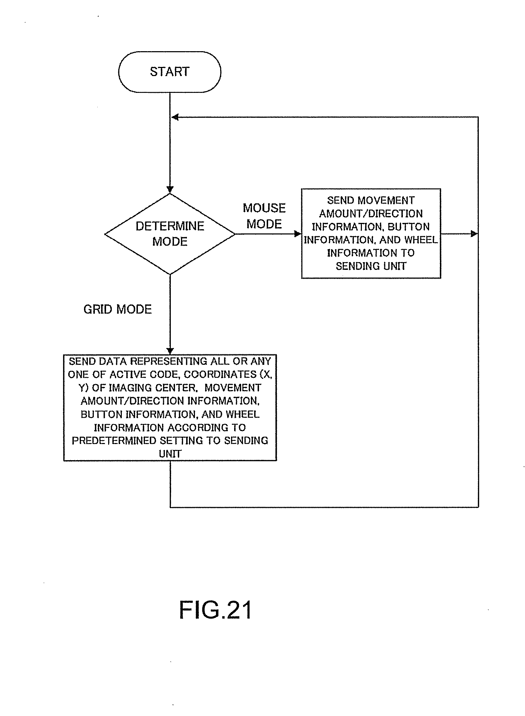

Fig. 21 illustrates a flowchart of an algorithm relating to sending of the control unit 1060.

As illustrated in Fig. 21, the control unit 1060 determines the current mode, selects information conforming to the mode, and sends the information to the sending unit 1065.

More specifically, in the case of a mouse mode, the control unit 1060 sends, out of information sent to the control unit 1060, information relating to a function of a normal mouse, i.e., information relating to an operation of the right and left buttons, information relating to a wheel operation, and information relating to a relative position to the sending unit.

In the case of the grid mode, the control unit 1060 sends, out of an active code and coordinates (X, Y) of the imaging center in addition to the information relating to an operation of right and left buttons, the information relating to a wheel operation, and the information relating to a relative position, a signal found according to predetermined setting to the sending unit.

The predetermined setting is setting determined in advance as to which information is to be sent from the mouse. The predetermined setting may be setting optionally performed by the user using a predetermined operation, for example. Alternatively, the predetermined setting may be setting determined by an application installed in the information processing apparatus 7.

<As to sending unit>

The functional block diagram is similar to that in the first embodiment, and hence the description thereof is not omitted.

<As to position of prism>

The prism 1080 need not necessarily be provided at the front of a mouse, as illustrated in Fig. 17. For example, the prism 1080 may be arranged in a position spaced slightly leftward for a right-handed user, may be arranged in a position spaced slightly rightward for a left-handed user, or may be designed to be switchable between the right and left positions.

**Claims**

1. A mouse that reads a dot pattern formed on a medium surface, obtained by patterning XY coordinate values or XY coordinate values and a code value based on a predetermined algorithm, and optically readable, the mouse **characterized by** comprising:

   a casing having a reading hole for reading the dot pattern provided at its bottom;
   position designation means for designating a predetermined position on the medium surface outside the casing;
   a dot pattern reading unit for reading the dot pattern on the medium surface just under the reading hole;
   dot pattern irradiation means for irradiating the medium surface with light to read the dot pattern; and
   a control unit for calculating the XY coordinate values read by the dot pattern reading unit and a direction of the dot pattern, and correcting the XY coordinate values and the direction of the dot pattern by a predetermined distance and direction, to calculate the predetermined position designated by the position designation means.

2. The mouse according to claim 1, **characterized in that** the position designation means designates the predetermined position on the medium surface by a shape of a projection extending from the casing or a mark provided in a transparent member extending from the casing.

3. The mouse according to claim 1, **characterized in that** the position designation means designates the predetermined position on the medium surface by irradiation light from predetermined position irradiation means provided in the casing.

4. The mouse according to claim 3, **characterized in that** the irradiation light from the predetermined position irradiation means is a laser beam.

5. A mouse that reads a dot pattern formed on a medium surface, obtained by patterning XY coordinate values or XY coordinate values and a code value based on a predetermined algorithm, and optically readable, the mouse **char-**

**acterized by** comprising:

a casing provided with a prism including a dot pattern input unit for reading the dot pattern;
a dot pattern reading unit for reading the dot pattern on the medium surface in the vicinity of the dot pattern input unit via the prism;
dot pattern irradiation means for irradiating the medium surface with light via the prism to read the dot pattern; and
a control unit for finding a predetermined position on the medium surface by at least the XY coordinate values read by the dot pattern reading unit,
wherein the prism is provided to extend outward from the casing as the position designation means, and
the position designation means designates the predetermined position on the medium surface by a shape of the prism extending from the casing or providing a mark in the prism extending from the casing.

6. A mouse that reads a dot pattern formed on a medium surface, obtained by patterning XY coordinate values or XY coordinate values and a code value based on a predetermined algorithm, and optically readable, the mouse **characterized by** comprising:

a casing provided with a prism including a dot pattern input unit for reading the dot pattern;
a dot pattern reading unit for reading the dot pattern on the medium surface in the vicinity of the dot pattern input unit via the prism;
dot pattern irradiation means for irradiating the medium surface with light via the prism to read the dot pattern; and
a control unit for finding a predetermined position on the medium surface by at least the XY coordinate values read by the dot pattern reading unit,
wherein the position designation means designates the predetermined position on the medium surface by irradiation light irradiated via the prison from predetermined position irradiation means provided in the casing.

7. The mouse according to claim 6, **characterized in that** the irradiation light irradiated via the prism from the predetermined position irradiation unit is a laser beam.

8. The mouse according to any one of claim 1 or 5, **characterized in that**
the dot pattern reading unit further functions as an optical reading unit in an optical mouse,
the control unit further analyzes a change of an image read per unit time by the dot pattern reading unit, and
a movement amount and a direction on the medium surface are transmitted.

ROTATIONAL
ANGLE θ

DIRECTION OF
DOT PATTERN

DIRECTION OF
MOUSE

50

40

12

1

## FIG.1(a)

DIRECTION OF
DOT PATTERN

DIRECTION OF
MOUSE

ROTATIONAL
ANGLE
θ

99

IMAGING CENTER

6

## FIG.1(b)

FIG.2 (a)

VICINITY MAP

TEMPLE STEEPED IN HISTORY

LOCAL PRODUCT

HISTORIC SITE GUIDE

FIG.2 (b)

FIG.2 (c)

FIG.3 (a)

FIG.3 (b)

FIG.3 (c)

FIG.4

FIG.5 (a)

FIG.5 (b)

0000 _72_ 0001   0010   0011   0100   0101   0110   0111

_74_

1000   1001   1010   1011   1100   1101   1110   1111

## FIG.6

## FIG.7 (a)     FIG.7 (b)     FIG.7 (c)

_71_   _6_   _71_

| | | | |
|---|---|---|---|
| $I_{16}$ | $I_5$ | $I_6$ | $I_7$ |
| $I_{15}$ | $I_4$ | $I_1$ | $I_8$ |
| $I_{14}$ | $I_3$ | $I_2$ | $I_9$ |
| $I_{13}$ | $I_{12}$ | $I_{11}$ | $I_{10}$ |

## FIG.8

|       |       |       |
|-------|-------|-------|
| $I_3$ | $I_4$ | $I_5$ |
| $I_2$ | $I_1$ | $I_6$ |

2 × 3

## FIG.9 (a)

|       |       |       |
|-------|-------|-------|
| $I_3$ | $I_4$ | $I_5$ |
| $I_2$ | $I_1$ | $I_6$ |
| $I_9$ | $I_8$ | $I_7$ |

3 × 3

## FIG.9 (b)

|          |          |          |
|----------|----------|----------|
| $I_5$    | $I_6$    | $I_7$    |
| $I_4$    | $I_1$    | $I_8$    |
| $I_3$    | $I_2$    | $I_9$    |
| $I_{12}$ | $I_{11}$ | $I_{10}$ |

3 × 4

## FIG.9 (c)

|          |          |          |          |          |          |
|----------|----------|----------|----------|----------|----------|
| $I_{36}$ | $I_{17}$ | $I_{18}$ | $I_{19}$ | $I_{20}$ | $I_{21}$ |
| $I_{35}$ | $I_{16}$ | $I_5$    | $I_6$  – | $I_7$    | $I_{22}$ |
| $I_{34}$ | $I_{15}$ | $I_4$    | $I_1$    | $I_8$    | $I_{23}$ |
| $I_{33}$ | $I_{14}$ | $I_3$    | $I_2$    | $I_9$    | $I_{24}$ |
| $I_{32}$ | $I_{13}$ | $I_{12}$ | $I_{11}$ | $I_{10}$ | $I_{25}$ |
| $I_{31}$ | $I_{30}$ | $I_{29}$ | $I_{28}$ | $I_{27}$ | $I_{26}$ |

6 × 6

## FIG.9 (d)

74a

72

73c

74b

73b

73d

74c

73a

73e

74d

FIG.10 (a)

72

NO
INFORMATION
DOT

FIG.10 (b)

FIG.10 (c)

FIG.11

| $C_{31}$ | $C_{30}$ | $C_{29}$ | $C_{28}$ | $C_{27}$ | $C_{26}$ | $C_{25}$ | $C_{24}$ | $C_{23}$ | $C_{22}$ | $C_{21}$ | $C_{20}$ | $C_{19}$ | $C_{18}$ | $C_{17}$ | $C_{16}$ | $C_{15}$ | $C_{14}$ | $C_{13}$ | $C_{12}$ | $C_{11}$ | $C_{10}$ | $C_9$ | $C_8$ | $C_7$ | $C_6$ | $C_5$ | $C_4$ | $C_3$ | $C_2$ | $C_1$ | $C_0$ |
|---|---|---|---|---|---|---|---|---|---|---|---|---|---|---|---|---|---|---|---|---|---|---|---|---|---|---|---|---|---|---|---|
| PARITY | | | | | CODE VALUE | | | | | | | | | | | | Y COORDINATE | | | | | | | | X COORDINATE | | | | | | |

## FIG.12 (a)

(1) XY COORDINATE AREA

| $C_{31}$ | $C_{30}$ | $C_{29}$ | $C_{28}$ | $C_{27}$ | $C_{26}$ | $C_{25}$ | $C_{24}$ | $C_{23}$ | $C_{22}$ | $C_{21}$ | $C_{20}$ | $C_{19}$ | $C_{18}$ | $C_{17}$ | $C_{16}$ | $C_{15}$ | $C_{14}$ | $C_{13}$ | $C_{12}$ | $C_{11}$ | $C_{10}$ | $C_9$ | $C_8$ | $C_7$ | $C_6$ | $C_5$ | $C_4$ | $C_3$ | $C_2$ | $C_1$ | $C_0$ |
|---|---|---|---|---|---|---|---|---|---|---|---|---|---|---|---|---|---|---|---|---|---|---|---|---|---|---|---|---|---|---|---|
| PARITY | USE IDENTIFYING BIT | | | | | Y COODDINATE | | | | | | | | | | | | | | X COORDINATE | | | | | | | | | | |

(2) CODE VALUE AREA

| $C_{31}$ | $C_{30}$ | $C_{29}$ | $C_{28}$ | $C_{27}$ | $C_{26}$ | $C_{25}$ | $C_{24}$ | $C_{23}$ | $C_{22}$ | $C_{21}$ | $C_{20}$ | $C_{19}$ | $C_{18}$ | $C_{17}$ | $C_{16}$ | $C_{15}$ | $C_{14}$ | $C_{13}$ | $C_{12}$ | $C_{11}$ | $C_{10}$ | $C_9$ | $C_8$ | $C_7$ | $C_6$ | $C_5$ | $C_4$ | $C_3$ | $C_2$ | $C_1$ | $C_0$ |
|---|---|---|---|---|---|---|---|---|---|---|---|---|---|---|---|---|---|---|---|---|---|---|---|---|---|---|---|---|---|---|---|
| PARITY | USE IDENTIFYING BIT | | | | | | | | | | | | CODE VALUE | | | | | | | | | | | | | | | | | | |

(3) XY COORDINATE/CODE VALUE AREA

| $C_{31}$ | $C_{30}$ | $C_{29}$ | $C_{28}$ | $C_{27}$ | $C_{26}$ | $C_{25}$ | $C_{24}$ | $C_{23}$ | $C_{22}$ | $C_{21}$ | $C_{20}$ | $C_{19}$ | $C_{18}$ | $C_{17}$ | $C_{16}$ | $C_{15}$ | $C_{14}$ | $C_{13}$ | $C_{12}$ | $C_{11}$ | $C_{10}$ | $C_9$ | $C_8$ | $C_7$ | $C_6$ | $C_5$ | $C_4$ | $C_3$ | $C_2$ | $C_1$ | $C_0$ |
|---|---|---|---|---|---|---|---|---|---|---|---|---|---|---|---|---|---|---|---|---|---|---|---|---|---|---|---|---|---|---|---|---|
| PARITY | USE IDENTIFYING BIT | | | | CODE VALUE | | | | | | | | | | | | Y COORDINATE | | | | | | | X COORDINATE | | | | | | |

## FIG.12 (b)

| $C_{31}$ | $C_{30}$ | $C_{29}$ | $C_{28}$ | $C_{27}$ | $C_{26}$ | $C_{25}$ | $C_{24}$ | $C_{23}$ | $C_{22}$ | $C_{21}$ | $C_{20}$ | $C_{19}$ | $C_{18}$ | $C_{17}$ | $C_{16}$ | $C_{15}$ | $C_{14}$ | $C_{13}$ | $C_{12}$ | $C_{11}$ | $C_{10}$ | $C_9$ | $C_8$ | $C_7$ | $C_6$ | $C_5$ | $C_4$ | $C_3$ | $C_2$ | $C_1$ | $C_0$ |
|---|---|---|---|---|---|---|---|---|---|---|---|---|---|---|---|---|---|---|---|---|---|---|---|---|---|---|---|---|---|---|---|---|
| PARITY | | | | | | Y COORDINATE | | | | | | | | | | | | X COORDINATE | | | | | | | | | | | | |

## FIG.12 (c)

PC MAIN BODY
7

MOUSE 1

SENDING
UNIT 65

CONTROL UNIT
60

MOUSE MODE/GRID
MODE
MODE CHANGEOVER
SWITCH

BUTTON OPERATION
DETECTING UNIT 31

WHEEL DETECTION
UNIT 35

MOVEMENT AMOUNT/
DIRECTION DETECTION
UNIT 20

DOT PATTERN
READING UNIT
10

MEDIUM

DOT PATTERN
6

FIG.13

START

READ IMAGE DATA — S10

ANALYZE IMAGE DATA — S20

S30 — IS PREDETERMINED DOT PATTERN INCLUDED? — No →

Yes

CALCULATE CODE INFORMATION AND MOUSE ROTATIONAL ANGLE — S40

S50 — DOES CODE INFORMATION INCLUDE ACTIVE CODE? — Yes → SEND ACTIVE CODE TO SENDING UNIT — S50b

No

S60 — DOES CODE INFORMATION INCLUDE XY COORDINATE INFORMATION? — No →

Yes

S70 — IS FLAG FOR CONVERSION INTO COORDINATES OF PREDETERMINED POSITION (TARGET 50) SET? — No → SEND COORDINATES (X, Y) OF IMAGING CENTER TO SENDING UNIT — S70b

Yes

FIND COORDINATE VALUES (Xt, Yt) OF PREDETERMINED POSITION (TARGET 50) — S70a

SEND COORDINATE VALUES (Xt, Yt) OF PREDETERMINED POSITION (TARGET 50) TO SENDING UNIT — S80

FIG.14

29

START

S101 — DETERMINE MODE

MOUSE MODE → SEND MOVEMENT AMOUNT/DIRECTION INFORMATION, BUTTON INFORMATION, AND WHEEL INFORMATION TO SENDING UNIT — S102

GRID MODE → SEND DATA REPRESENTING ALL OR ANY ONE OF ACTIVE CODE, COORDINATES (X, Y) OF IMAGING CENTER, COORDINATE VALUES (Xt, Yt) OF PREDETERMINED POSITION (TARGET 50), MOVEMENT AMOUNT/ DIRECTION INFORMATION, BUTTON INFORMATION, AND WHEEL INFORMATION ACCORDING TO PREDETERMINED SETTING TO SENDING UNIT — S103

FIG.15

FIG.16 (a)

FIG.16 (b)

FIG.16 (c)

FIG.16 (d)

FIG.16 (e)

FIG.16 (f)

FIG.17 (a)

FIG.17 (b)

FIG.17 (c)

FIG.18

FIG.19 (a)

FIG.19 (b)

FIG.19 (c)

FIG.19 (d)

START

S1010 — READ IMAGE DATA

S1020 — ANALYZE IMAGE DATA

S1030 — IS PREDETERMINED DOT PATTERN INCLUDED? — No

Yes

S1040 — CALCULATE CODE INFORMATION

S1050 — DOES CODE INFORMATION INCLUDE ACTIVE CODE? — Yes — S1050b SEND ACTIVE CODE TO SENDING UNIT

No

S1060 — DOES CODE INFORMATION INCLUDE XY COORDINATE INFORMATION? — No

Yes

S1070 — SEND COORDINATES (X, Y) OF IMAGING CENTER TO SENDING UNIT

FIG.20

START

DETERMINE MODE

MOUSE MODE → SEND MOVEMENT AMOUNT/DIRECTION INFORMATION, BUTTON INFORMATION, AND WHEEL INFORMATION TO SENDING UNIT

GRID MODE

SEND DATA REPRESENTING ALL OR ANY ONE OF ACTIVE CODE, COORDINATES (X, Y) OF IMAGING CENTER, MOVEMENT AMOUNT/DIRECTION INFORMATION, BUTTON INFORMATION, AND WHEEL INFORMATION ACCORDING TO PREDETERMINED SETTING TO SENDING UNIT

FIG.21

# EP 2 367 093 A1

<table>
<tr><td colspan="2">INTERNATIONAL SEARCH REPORT</td><td colspan="2">International application No.<br>PCT/JP2009/006108</td></tr>
</table>

**A. CLASSIFICATION OF SUBJECT MATTER**
*G06F3/033*(2006.01)i, *G06F3/042*(2006.01)i

According to International Patent Classification (IPC) or to both national classification and IPC

**B. FIELDS SEARCHED**

Minimum documentation searched (classification system followed by classification symbols)
G06F3/03-3/047

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2007-213612 A (Kenji YOSHIDA),<br>23 August 2007 (23.08.2007),<br>paragraphs [0094] to [0102]; fig. 26 to 30<br>& WO 2005/114546 A1 | 1-8 |
| A | JP 2007-310894 A (Kenji YOSHIDA),<br>29 November 2007 (29.11.2007),<br>paragraphs [0094] to [0103]; fig. 26 to 30<br>& WO 2005/114546 A1 | 1-8 |
| A | JP 06-309084 A (Wacom Co., Ltd.),<br>04 November 1994 (04.11.1994),<br>entire text; all drawings<br>(Family: none) | 1-8 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>24 March, 2010 (24.03.10) | Date of mailing of the international search report<br>06 April, 2010 (06.04.10) |
|---|---|
| Name and mailing address of the ISA/<br>Japanese Patent Office | Authorized officer |
| Facsimile No. | Telephone No. |

Form PCT/ISA/210 (second sheet) (July 2009)

<table>
<tr><td colspan="2" align="center">**INTERNATIONAL SEARCH REPORT**</td><td colspan="2">International application No.<br><br>PCT/JP2009/006108</td></tr>
<tr><td colspan="4">C (Continuation).   DOCUMENTS CONSIDERED TO BE RELEVANT</td></tr>
<tr><td>Category*</td><td colspan="2" align="center">Citation of document, with indication, where appropriate, of the relevant passages</td><td>Relevant to claim No.</td></tr>
<tr><td align="center">A</td><td colspan="2">JP 2007-114869 A (Fuji Xerox Co., Ltd.),<br>10 May 2007 (10.05.2007),<br>paragraphs [0044] to [0048]; fig. 3<br>& US 2007/0084932 A1   & EP 1780656 A1</td><td align="center">1-8</td></tr>
<tr><td align="center">A</td><td colspan="2">JP 2007-310789 A (Sony Computer Entertainment Inc.),<br>29 November 2007 (29.11.2007),<br>paragraph [0019]; fig. 4<br>(Family: none)</td><td align="center">1-8</td></tr>
<tr><td align="center">A</td><td colspan="2">JP 2008-146680 A (Hitachi, Ltd.),<br>26 June 2008 (26.06.2008),<br>paragraphs [0015] to [0023]; fig. 2, 3<br>& US 2002/0030668 A1</td><td align="center">1-8</td></tr>
<tr><td align="center">A</td><td colspan="2">JP 2001-296957 A (Kabushiki Kaisha Ferumo),<br>26 October 2001 (26.10.2001),<br>entire text; all drawings<br>(Family: none)</td><td align="center">1-8</td></tr>
</table>

Form PCT/ISA/210 (continuation of second sheet) (July 2009)

**EP 2 367 093 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004126920 A
- JP 2007213612 A
- JP 2007310894 A